# EUROPEAN PATENT SPECIFICATION

(11) **EP 3 894 252 B1**
(45) Date of publication and mention of the grant of the patent: **30.07.2025**
(21) Application number: 19823823.0
(22) Date of filing: 13.12.2019
(51) Int. Cl.: B60K 11/08, B62D 35/00, B60K 13/02, F02M 35/10, F02M 35/16, F02M 35/022

(54) **COMMERCIAL MOTOR VEHICLE**
NUTZKRAFTFAHRZEUG
VÉHICULE COMMERCIAL À MOTEUR

(30) Priority: 13.12.2018 NL 2022201
(43) Date of publication of application: 20.10.2021
(73) Proprietor: DAF Trucks N.V., 5643 TW Eindhoven (NL)
(72) Inventor: SABERI, Josef, 5643 TW Eindhoven (NL); WIELAND, Albertus Martinus Herman, 5643 TW Eindhoven (NL)
(74) Representative: V.O.
(86) International application number: PCT/NL2019/050834
(87) International publication number: WO 2020/122725

(56) References cited:
- DE-A1- 19 916 758
- US-A- 4 235 298
- US-A- 4 689 060
- US-A1- 2018 010 559
- US-B2- 7 771 500

## Description

The invention relates to a commercial motor vehicle according to the preamble of claim 1.

Such a commercial motor vehicle is for example known from US2018/010559A1.

It is an object of the invention to provide a commercial vehicle in which water or moisture can be removed or separated from the intake air more efficiently.

According to the invention this object is obtained by commercial vehicle according to claim 1. According to the invention air guiding elements guide the intake air towards the fire wall, on which at least a part of the moisture or water contained in the air intake is deposited and then drips down from the fire wall. Thus moisture and water content is removed from the intake air before it enters the intake air inlet duct. Since according to the invention at least part of the moisture and water content is removed from the intake air before it enters the intake air inlet duct, the negative influence of moisture and water content on the performance of the internal combustion engine is at least reduced. Since the intake air guiding elements are curved intake air guiding elements arranged for guiding the intake air towards the fire wall in a direction at least substantially away from the intake air inlet duct opening intake air in which moisture and water is contained is not supplied directly in a direction towards the intake air inlet duct opening but due to the intake air guiding elements guiding the intake air away from the intake air inlet duct opening the intake air flow experiences a change of direction when it passes from the air intake towards the intake air inlet duct opening, as a result of which moisture or water content is forced by the generated centrifugal force towards the firewall where it is deposited. Thus moisture or water content can be more efficiently removed from the intake air before it enters the intake air inlet duct opening. In a preferred embodiment of a commercial vehicle according to the invention the curved intake air guiding elements are then formed by horizontal curved louvres arranged for guiding the intake air upwards. Alternatively the curved intake air guiding elements can be formed by horizontal curved louvres arranged for guiding the intake air downwards.

In a further embodiment of a commercial vehicle according to the invention the curved intake air guiding elements are formed by diagonally arranged curved louvres arranged for guiding the intake air towards the fire wall.

Alternatively the intake air guiding elements for guiding the intake air towards the fire wall can be integrated in a mesh.

The invention will be further explained with reference to the Figures, in which non-limiting exemplary embodiments of a commercial vehicle according to the invention are shown:
Figure 1A schematically shows an embodiment of a commercial motor vehicle according to the invention with an air intake, fire wall and intake air inlet duct;
Figure 1B in an enlarged view schematically shows a portion of the embodiment of the commercial motor vehicle shown in Fig. 1A in perspective and partly cut open;
Figure 2A schematically shows an embodiment of a commercial motor vehicle according to the invention in which curved intake air guiding elements are formed by horizontal curved louvres arranged for guiding the intake air upwards;
Figure 2B schematically shows an embodiment of a commercial motor vehicle according to the invention in which the intake air guiding elements are formed by horizontal curved louvres arranged for guiding the intake air downwards;
Figure 2C schematically shows an embodiment of a commercial motor vehicle according to the invention in which the intake air guiding elements are formed by diagonally arranged curved louvres arranged for guiding the intake air towards the fire wall; and
Figure 2D schematically shows an embodiment of a commercial motor vehicle according to the invention in which the intake air guiding elements for guiding the intake air towards the fire wall are integrated in a mesh.

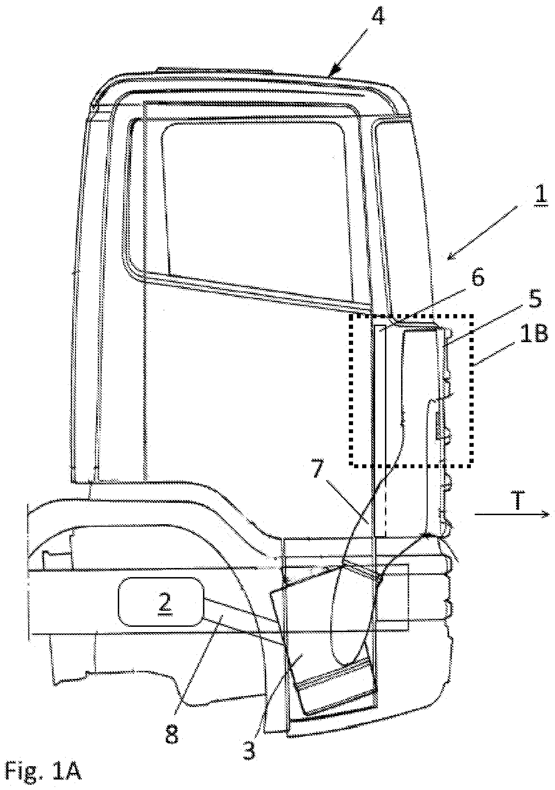

In Figure 1A schematically shows a first embodiment of a commercial motor vehicle 1 according to the invention. The commercial motor vehicle 1 comprises an internal combustion engine 2, an air filter assembly 3 and a driver cabin 4 positioned at the front of the commercial motor vehicle 1 as seen in the direction of travel T.

The driver cabin 4 has an air intake 5 at the front of the driver cabin 4, which air intake 5 is thus positioned at the front of the commercial motor vehicle. The commercial motor vehicle comprises a fire wall 6 extending transverse to direction of travel T. The fire wall 6 is spaced behind from the air intake 5 as seen in the direction of travel T and in the shown embodiment forms a cabin fire wall.

The commercial motor vehicle 1 further comprises an intake air inlet duct 7 for supplying intake air from the air intake 5 to the air filter assembly 3. As shown in Figure 1A the internal combustion engine 2 is provided downstream of the air filter assembly 3 and receives filter air from the air filter assembly 3 through a filtered air duct 8.

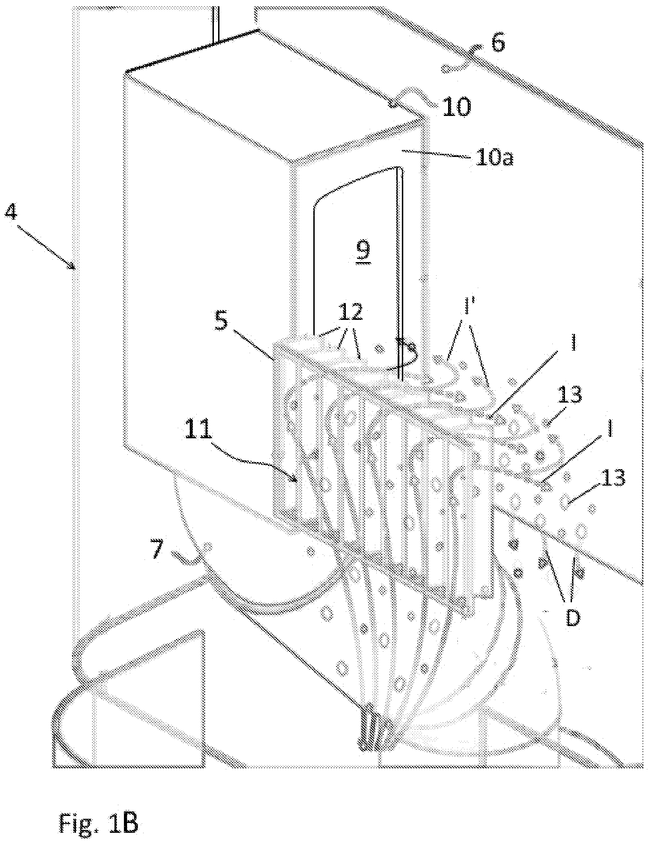

As is shown in the embodiment of Figure 1B the intake air inlet duct 7 has an intake air inlet duct opening 9 provided in a wall part 10a of an end portion 10 of the intake air inlet duct 7, which wall part lies in a vertical plane transverse to the fire wall 6, i.e. parallel to the direction of travel T. The air inlet duct opening is thus positioned downstream of the fire wall. Seen in the direction of travel T the intake air inlet duct opening 9 is positioned between the fire wall 6 and the air intake 5 and opens into the space between the air intake 5 and the fire wall 6.

The air intake 5 comprises a grille 11 having curved intake air guiding elements 12 for guiding the intake air I towards the fire wall 6. As shown in Figure 1B the air guiding elements 12 are formed by vertical louvres 12 which are curved in a direction away from the intake air inlet duct opening 9 which curved intake air guiding elements 12 guide the intake air in a direction at least substantially away from the intake air inlet duct opening 9. Due to the intake air guiding elements 12 guiding the intake air away from the intake air inlet duct opening 9 the intake air flow experiences a change of direction when it passes from the air intake 5 towards the intake air inlet duct opening 9, as a result of which moisture or water content is forced by the generated centrifugal force towards the firewall 6 where it is deposited. Thus moisture or water content contained in the air intake I which is directed to the fire wall 6 is deposited thereon in the form of drops 13 and drips down D from the fire wall 6. Thus moisture and water content is removed from the intake air I, and dehydrated intake air I' with a reduced moisture or water content is supplied to the intake air inlet duct 7. Please note that the dehydrated intake air I' is drawn into the intake air inlet duct 7 in a known manner, such as e.g. by means of the internal combustion engine (ICE) . Since the intake air I is first directed away from the intake air inlet duct opening 9 and due to the change in flow direction of the intake air a centrifugal force is exerted on water and moisture content as a result of which moisture and water is deposited on the fire wall 6, the dehydrated intake air I' is drawn into the intake air inlet duct 7, moisture and water content can be removed efficiently from the intake air.

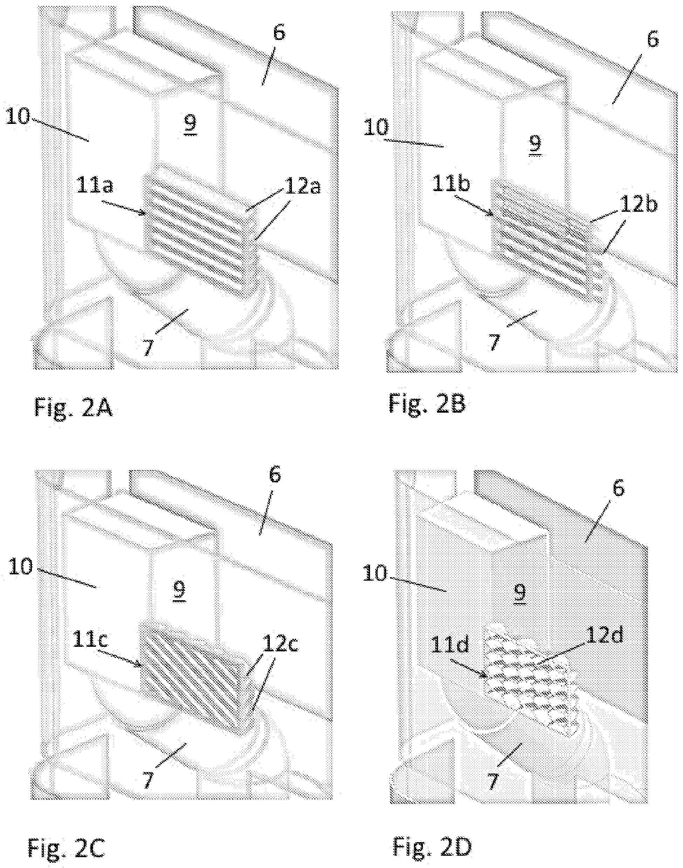

In a second embodiment of a commercial motor vehicle according to the invention shown in Figure 2A the curved intake air guiding elements of the grill 11a are formed by horizontal curved louvres 12a arranged for guiding the intake air I upwards towards the fire wall 6, so that moisture or/and water content is deposited on the fire wall 6 before the intake air enters the intake air inlet duct 7.

In a third embodiment of a commercial motor vehicle according to the invention shown in Figure 2B the curved intake air guiding elements of the grill 11b are formed by horizontal curved louvres 12b arranged for guiding the intake air I downwards towards the fire wall 6, so that moisture or/and water content is deposited on the fire wall 6 before the intake air enters the intake air inlet duct 7.

In a fourth embodiment of a commercial motor vehicle according to the invention shown in Figure 2C the curved intake air guiding elements of the grill 11b are formed by diagonally arranged curved louvres 12c for guiding the intake air I towards the fire wall 6, for example in a direction away from the intake air inlet duct opening 9 and upwards, so that due to the centrifugal force exerted thereon moisture or/and water content is deposited on the fire wall 6 before the intake air enters the intake air inlet duct 7.

In a fifth embodiment of a commercial vehicle according to the invention as shown in Figure 2D the intake air guiding elements 12d, which in an embodiment of the invention can be formed by curved intake air guiding elements, for guiding the intake air towards the fire wall 6 are integrated in a mesh 11d. The mesh 11d is arranged for guiding the intake air towards the fire wall 6 in particular at least in an upward direction, a downward direction and in a direction away from the intake air inlet duct opening 9. Due to the mesh 11d the intake air passing the mesh 11d is given a whirling motion as a result of which due to the exerted centrifugal force moisture or/and water content is deposited more efficiently on the fire wall 6.

## Claims

1. Commercial motor vehicle (1) comprising:
- an internal combustion engine (2);
- an air filter assembly (3);
- an air intake (5) positioned at the front of the commercial motor vehicle (1) as seen in the direction of travel (T);
- a fire wall (6) extending transverse to direction of travel (T), said fire wall (6) being spaced from the air intake (5) as seen in the direction of travel (T);
- an intake air inlet duct (7) for supplying intake air from the air intake (5) to the air filter assembly (3), the internal combustion engine (2) being provided downstream of the air filter assembly (3); the intake air inlet duct (7) having an intake air inlet duct opening (9), wherein the air intake (5) comprises a grille (11) having intake air guiding elements (12) for guiding the intake air towards the fire wall (6), said air inlet duct opening (9) being positioned downstream of the fire wall (6), **characterized in that** the intake air guiding elements (12) are curved intake air guiding elements arranged for guiding the intake air towards the fire wall (6) in a direction at least substantially away from the intake air inlet duct opening (9).

2. Commercial vehicle (1) according to claim 1, wherein the curved intake air guiding elements (12) are formed by horizontal curved louvres (12a, 12b, 12c) arranged for guiding the intake air upwards.

3. Commercial vehicle (1) according to claim 1, wherein the curved intake air guiding elements (12) are formed by horizontal curved louvres (12a, 12b, 12c) arranged for guiding the intake air downwards.

4. Commercial vehicle (1) according to claim 1, wherein the curved intake air guiding elements (12) are formed by diagonally arranged curved louvres (12a, 12b, 12c) arranged for guiding the intake air towards the fire wall (6).

5. Commercial vehicle (1) according to any one of the preceding claims, wherein the intake air guiding elements (12d) for guiding the intake air towards the fire wall (6) are integrated in a mesh (11d).

## Patentansprüche

1. Nutzkraftfahrzeug (1), umfassend:
- eine Brennkraftmaschine (2);
- eine Luftfilterbaugruppe (3);
- einen Lufteinlass (5), bei Betrachtung in Fahrtrichtung (T) an der Front des Nutzfahrzeugs (1) positioniert;
- ein sich quer zur Fahrtrichtung (T) erstreckendes Brandschott (6), wobei das Brandschott (6) bei Betrachtung in Fahrtrichtung (T) vom Lufteinlass (5) beabstandet ist;
- einen Ansauglufteinlasskanal (7) zur Zuführung von Ansaugluft vom Lufteinlass (5) zur Luftfilterbaugruppe (3), wobei die Brennkraftmaschine (2) der Luftfilterbaugruppe (3) nachgelagert vorgesehen ist; wobei der Ansauglufteinlasskanal (7) eine Ansauglufteinlasskanalöffnung (9) aufweist, wobei der Lufteinlass (5) ein Gitter (11) aufweist, das Ansaugluftleitelemente (12) zum Leiten der Ansaugluft in Richtung des Brandschotts (6) aufweist, wobei die Lufteinlasskanalöffnung (9) dem Brandschott (6) nachgelagert positioniert ist, **dadurch gekennzeichnet, dass** die Ansaugluftleitelemente (12) gewölbte Ansaugluftleitelemente sind, angeordnet zum Leiten der Ansaugluft hin zum Brandschott (6) in einer Richtung zumindest im Wesentlichen von der Ansauglufteinlasskanalöffnung (9) weg.

2. Nutzfahrzeug (1) nach Anspruch 1, wobei die gewölbten Ansaugluftleitelemente (12) durch horizontal gewölbte Lamellen (12a, 12b, 12c) ausgebildet sind, angeordnet zum Leiten der Ansaugluft nach oben.

3. Nutzfahrzeug (1) nach Anspruch 1, wobei die gewölbten Ansaugluftleitelemente (12) durch horizontale gewölbte Lamellen (12a, 12b, 12c) ausgebildet sind, angeordnet zum Leiten der Ansaugluft nach unten.

4. Nutzfahrzeug (1) nach Anspruch 1, wobei die gewölbten Ansaugluftleitelemente (12) durch diagonal angeordnete gewölbte Lamellen (12a, 12b, 12c) ausgebildet sind, angeordnet zum Leiten der Ansaugluft in Richtung des Brandschotts (6).

5. Nutzfahrzeug (1) nach einem der vorhergehenden Ansprüche, wobei die Ansaugluftleitelemente (12d) zum Leiten der Ansaugluft in Richtung des Brandschotts (6) in ein Gitter (11d) integriert sind.

## Revendications

1. Véhicule commercial à moteur (1) comprenant :
- un moteur à combustion interne (2) ;
- un ensemble filtre à air (3) ;
- une admission d'air (5) positionnée à l'avant du véhicule commercial à moteur (1) en regardant dans la direction de déplacement (T) ;
- une cloison pare-feu (6) s'étendant transversalement à la direction de déplacement (T), ladite cloison pare-feu (6) étant espacée de l'admission d'air (5) en regardant dans la direction de déplacement (T) ;
- un conduit d'entrée d'air d'admission (7) pour fournir de l'air d'admission provenant de l'admission d'air (5) à l'ensemble filtre à air (3), le moteur à combustion interne (2) étant prévu en aval de l'ensemble filtre à air (3) ; le conduit d'entrée d'air d'admission (7) présentant une ouverture de conduit d'entrée d'air d'admission (9), dans lequel l'admission d'air (5) comprend une grille (11) présentant des éléments de guidage d'air d'admission (12) pour guider l'air d'admission vers la cloison pare-feu (6), ladite ouverture de conduit d'entrée d'air (9) étant positionnée en aval de la cloison pare-feu (6), **caractérisé en ce que** les éléments de guidage d'air d'admission (12) sont des éléments de guidage d'air d'admission incurvés agencés pour guider l'air d'admission vers la cloison pare-feu (6) dans une direction au moins sensiblement éloignée de l'ouverture du conduit d'entrée d'air d'admission (9).

2. Véhicule commercial (1) selon la revendication 1, dans lequel les éléments de guidage d'air d'admission incurvés (12) sont formés par des fentes d'aération incurvées horizontales (12a, 12b, 12c) agencées pour guider l'air d'admission vers le haut.

3. Véhicule commercial (1) selon la revendication 1, dans lequel les éléments de guidage d'air d'admission incurvés (12) sont formés par des fentes d'aération incurvées horizontales (12a, 12b, 12c) agencées pour guider l'air d'admission vers le bas.

4. Véhicule commercial (1) selon la revendication 1, dans lequel les éléments de guidage d'air d'admission incurvés (12) sont formés par des fentes d'aération incurvées agencées en diagonale (12a, 12b, 12c) agencées pour guider l'air d'admission vers la cloison pare-feu (6).

5. Véhicule commercial (1) selon l'une quelconque des revendications précédentes, dans lequel les éléments de guidage d'air d'admission (12d) pour guider l'air d'admission vers la cloison pare-feu (6) sont intégrés dans un treillis (11d).
